# EUROPEAN PATENT SPECIFICATION

(11) **EP 1 045 630 B1**
(45) Date of publication and mention of the grant of the patent: **11.09.2002**
(21) Application number: 99903445.7
(22) Date of filing: 27.01.1999
(51) Int. Cl.: A01D 34/64, A01D 34/74, A01D 34/68

(54) **AUTOMATIC POSITIONING CONTROL SYSTEM**
SYSTEM ZUR AUTOMATISCHEN POSITIONSKONTROLLE
SYSTEME DE COMMANDE AUTOMATIQUE DE POSITIONNEMENT

(30) Priority: 27.01.1998 US 72773 P
(43) Date of publication of application: 25.10.2000
(73) Proprietor: Schaedler, Axel, Medina, OH 44256 (US)
(72) Inventor: Schaedler, Axel, Medina, OH 44256 (US)
(74) Representative: Rutetzki, Andreas, Dipl.-Ing.
(86) International application number: US9901744
(87) International publication number: WO99037134

(56) References cited:
- FR-A- 2 592 433
- US-A- 5 636 444
- PATENT ABSTRACTS OF JAPAN vol. 018, no. 471 (C-1245), 2 September 1994 & JP 06 153649 A (ISEKI & CO LTD), 3 June 1994

## Description

### Technical Field

This invention pertains to the art of methods and apparatuses for vacuum actuators, and more specifically to methods and apparatuses for automatically controlling the position of an object on a lawn tractor with a vacuum actuator.

### Background Art

It is well known to provide riding lawn mowers with control devices for various mechanisms on the mower. For example U.S. Patent No. 5,351,467 to Trefz et al. discloses an apparatus for suspending, raising and lowering a cutting deck that is held beneath a riding lawn mower. Trefz et al. disclose a foot pedal for use in adjusting the height of the cutting deck. A suspending assembly is also provided for the additional adjustment of the height of the cutting deck. This cumbersome hand and foot manipulation is required to adjust the height of the cutting mechanism of this disclosure. It also known in the art to provide complex and expensive hydraulic systems for adjusting mower decks. What is needed is an easy yet inexpensive and relatively simple apparatus and method for automatically adjusting the height of a mower deck having infinite adjustability within a given range.

U.S. Patent No. 5,353,578 to Irby et al. discloses a drive system for lawn mowers. The drive system includes a speed control mechanism and is intended for a walk-behind mower. Manual adjustment of a lever is required to adjust this drive system. It is also known in the art to provide for complex and relatively expensive systems for controlling the speed of a riding lawn mower. What is needed is an easy, relatively inexpensive method and apparatus for automatically controlling the speed of a riding lawn mower having infinite adjustability within a given range.

FR-A-2 592 433 to Legrand et al. discloses a control system for assisting a handicap person in manipulating the accelerator and brake control for a automotive vehicle. The invention incorporates disks that rotate to selectively communicate a vacuum source or atmospheric pressure to an actuator. The disks are manually adjusted via hand controls.

The present invention provides a mower having a positioning control system that is used to control the height of a mower deck. Thus, the positioning control system of this invention is simple in design, effective in use, and overcomes the foregoing difficulties and others while providing better and more advantageous overall results.

### Disclosure of the Invention

According to one aspect of the present invention, a mower is provided and includes a frame, a mower deck operatively mounted to the frame, an engine for use in selectively rotating the blade, and a position control system for use in positioning the mower deck. The position control system includes a vacuum actuator, connecting means for operatively connecting the vacuum actuator to the mower deck, vacuum means for use in providing a vacuum to the vacuum actuator, activating means for use selectively activating the vacuum actuator and, position feedback means for feeding back the position of the mower deck to the activating means.

According to preferred aspect of this invention, the activating means includes a connection shaft fixedly connected to said frame, first and second control discs each having connection bores that receive the connection shaft and are selectively rotatable about said connection shaft and, a control lever operatively connected to the first control disc.

According to still another aspect of this invention, a method for adjusting the position of a mower deck is provided. The method includes the following steps. First, a control lever is positioned by the operator. Then. the vacuum actuator is brought into communication with the intake manifold. This causes a first side of the vacuum actuator to move in a first direction thereby forcing the mower deck to move in the same first direction. Next, the position of the mower deck is fed back to the position controller. The vacuum actuator is then dis-communicated from the intake manifold. This stops the motion of the first side of the vacuum actuator in the first direction and thus stops the motion of the mower deck in the first direction.

One advantage of the present invention is that the positioning control system automatically controls the position of the mower deck with infinite adjustability within a given range.

Still another advantage of the present invention is that its power is of no financial cost when the intake manifold of an engine is used to provide the required vacuum.

### Brief Description of the Drawings

The invention may take physical form in certain parts and arrangement of parts, a preferred embodiment of which will be described in detail in this specification and illustrated in the accompanying drawings which form a part hereof and wherein:
FIGURE 1 is an elevation side view of a typical lawn tractor shown partially cut away to illustrate the positioning control system of this present invention.
FIGURE 2 is a schematic representation of the positioning control system showing how an object can be position controlled.
FIGURE 3 is a perspective end view of the first control disc shown with exaggerated thickness to better illustrate how the first and second ports communicate the inner surface to the outer surface.
FIGURE 4 is a perspective end view of the second control disc shown with exaggerated thickness to better illustrate how the port communicates the inner surface to the outer surface.
FIGURE 5 is an enlarged partial side view of the position controller showing the sealing means used to maintain the first and second control discs in sealing relationship.
FIGURE 6 is an end view illustrating the inner surface of the first control disc on the same plane as the inner surface of the second control disc and showing the angular length of the slot surface of the first port of the first control disc.

### Description of the Preferred Embodiment

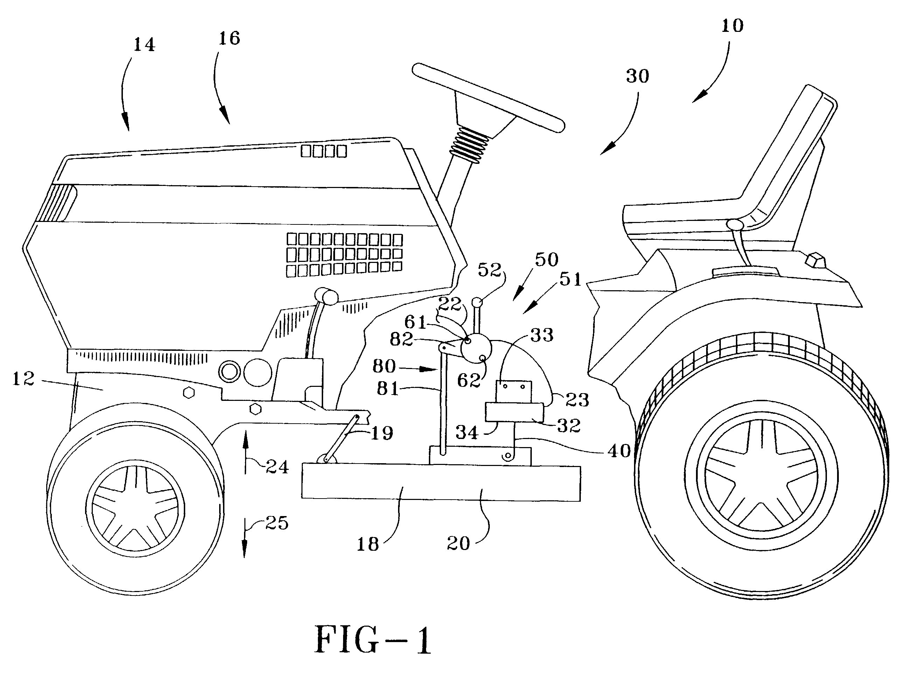

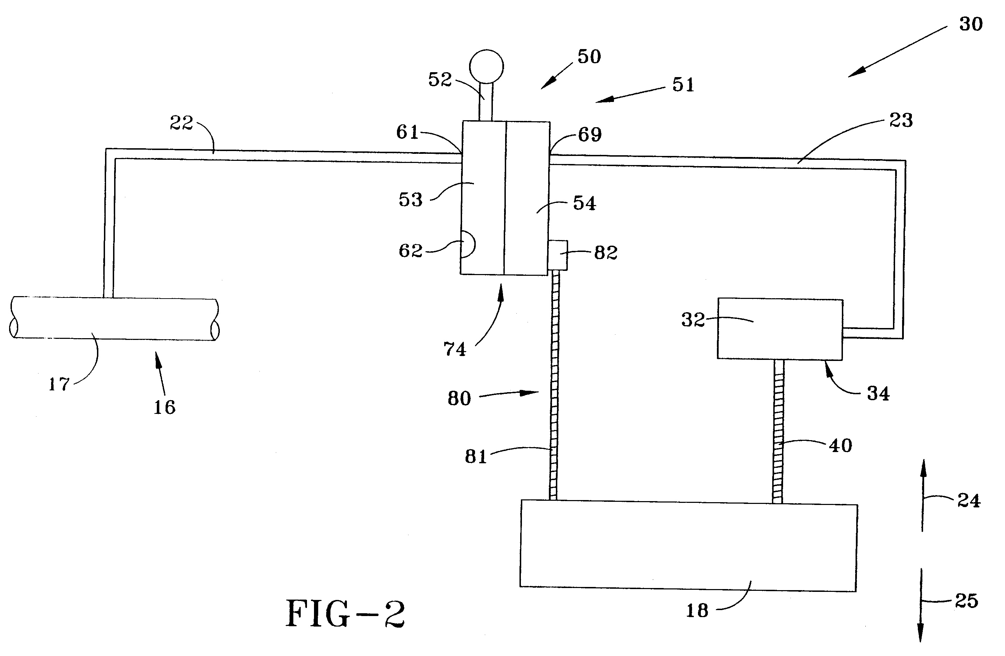

Referring now to the drawings wherein the showings are for purposes of illustrating a preferred embodiment of the invention only and not for purposes of limiting the same, FIGURE 1 shows a lawn tractor 10 that is equipped with a positioning control system 30 for use in controlling the position of an object 18. This invention is directed to a lawn tractor 10 having a mower deck 20 as the object 18 but the invention is applicable to other mowers as well. The lawn tractor 10 has a frame 12 and an engine 14. The engine 14 can be of any type currently used in the art but preferably includes a vacuum means 16 such as an intake manifold 17 as shown in FIGURE 2. It should be noted that other vacuum means such as a vacuum pump can also be used with this invention. The engine 14 is used, as is commonly known in the art, to drive one or more cutting blades (not shown) that rotate within the mower deck 20. The mower deck 20 is operatively connected to the frame 12 by any means chosen with sound engineering judgement such as by being pivotably connected to an attachment bar 19 that is pivotably connected to the frame 12 as shown in FIGURE 1.

With reference now to FIGURES 1-2, the object 18 can be any object chosen with sound engineering judgement that requires positioning control. The object 18 may be, for example, a lever, a rod or any other such member. As noted above and shown in FIGURE 1, the object 18 shown is the mower deck 20. The mower deck 20 can be position adjusted in either first direction 24, second direction 25 or it may remain in its given position.

With continuing reference to FIGURES 1-2, the positioning control system 30 includes a vacuum actuator 32, connecting means 40 for operatively connecting the vacuum actuator 32 to the object 18, the vacuum means 16 for providing a vacuum to the vacuum actuator 32, activating means 50 for selectively activating the vacuum actuator 32, and position feedback means 80 for feeding back the position of the object 18 to the activating means 50. Preferably the position feedback means 80 selectively de-activates the activating means 50 and thereby selectively de-activates the vacuum actuator 32 as required. In this way the object 18 can be maintained at its given position.

Still referring to FIGURES 1-2, any vacuum actuator chosen with sound engineering judgement is useful in this invention. As shown in FIGURE 2, a first vacuum line 22 is used to communicate the vacuum means 16 to the activating means 50. A second vacuum line 23 is used to communicate the activating means 50 to the vacuum actuator 32. The vacuum actuator 32 has a first side 34 that moves in the first direction 24 as a vacuum is established inside the vacuum actuator 32. A vacuum is established, as is commonly known in the art, by removing air from inside the vacuum actuator 32. When a vacuum within the vacuum actuator 32 is removed, that is air is permitted to enter the vacuum actuator 32, the first side 34 moves in the second direction 25. Therefore, the vacuum actuator 32 can be initiated by either establishing a vacuum within or removing a vacuum from the vacuum actuator 32. In either case, the first side 34 of the vacuum actuator 32 will move accordingly. Such movement of the first side 34 of the vacuum actuator 32 can be used in controlling the position of the object 18 as will be discussed further below. The vacuum actuator 32 is attached to the frame 12 of the lawn tractor 10 by any means chosen with sound engineering judgement such as by using an actuator bracket 33 as shown in FIGURE 1.

With continuing reference to FIGURES 1-2, the connecting means 40 can also be of any type chosen with sound engineering judgement that can receive and transmit both tensile and compressive forces. The connecting means 40 operatively connects the first side 34 of the vacuum actuator 32 to the object 18 that may be the mower deck 20. The movement of the first side 34 of the vacuum actuator 32 will be transmitted through the connecting means 40 to the object 18 that is being positioned controlled.

Still referring to FIGURES 1-2, in the preferred embodiment the engine 14 of the lawn tractor 10 comprises the intake manifold 17 as is commonly known in the art. The intake manifold 17 is preferably used as the vacuum means 16 for providing a vacuum to the vacuum actuator 32. In this way, as long as the engine 14 is running, there is a vacuum means 16 available for the vacuum actuator 32. It should be noted that other vacuum means, such as a vacuum pump (not shown), can be used with this invention. This is especially useful when the engine 14 is not an internal combustion engine but instead is, for example, an electric motor. As noted above, the first vacuum line 22 communicates the intake manifold 17 to the activating means 50.

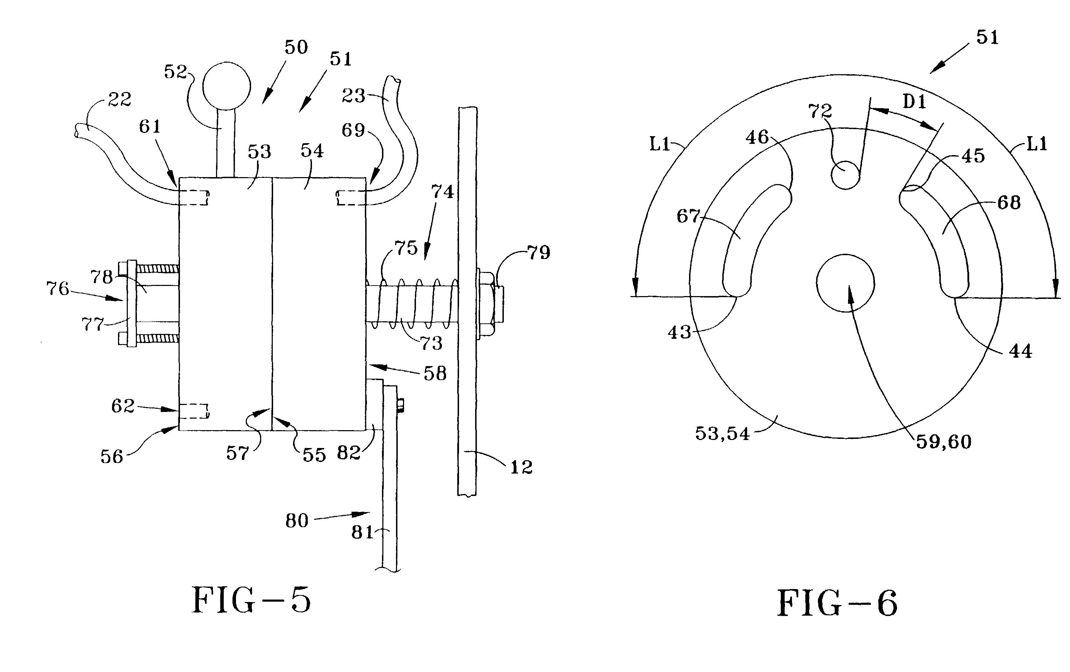

With reference now to FIGURES 1-5, the activating means 50 used to selectively activate the vacuum actuator 32 can be of any type chosen with sound engineering judgement. In this preferred embodiment, the activating means 32 is a position controller 51 that includes first and second control discs 53, 54. The first and second control discs 53, 54 have inner surfaces 55, 57 and outer surfaces 56, 58 respectively. The inner surface 55 of the first control disc 53 faces the inner surface 57 of the second control disc 54. The first and second control discs 53, 54 have connection bores 59, 60 that are positioned concentrically to receive a connection shaft 73, shown in FIGURE 5, having first and second ends 78, 79. The connection shaft 73 is preferably fixedly attached to the frame 12. The first and second control discs 53, 54 are selectively rotatable about the connection shaft 73 as will be discussed further below. A control lever 52 is operatively connected to the first control disc 53 and is used by an operator to position the first control disc 53. This in turn positions the object 18 as will be discussed further below. Preferably, the control lever 52 has labeled positions that correspond to the optional positions for the object. For example, the control lever 52 may have labeled positions corresponding to the available ranges of mower deck height for the mower deck 20.

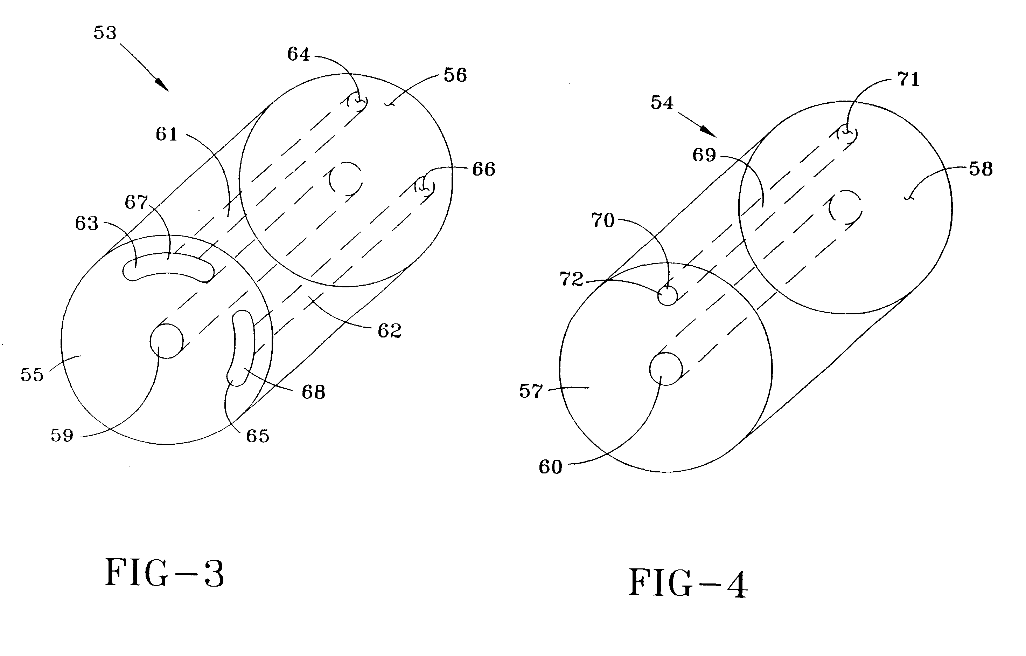

With reference now to FIGURES 2-3 and 5-6, the first control disc 53 has first and second ports 61, 62 each having first ends 63, 65 and second ends 64, 66 respectively. Thus, the first and second ports 61, 62 communicate the inner surface 55 to the outer surface 56 of the first control disc 53. The first end 63 of the first port 61 has a slot surface 67 coplanar with the inner surface 55 of the first control disc 53. As shown in FIGURES 3 and 6, the slot surface 67 is positioned angularly on the inner surface 55. The second port 62 similarly has a slot surface 68. The first port 61 is selectively used to communicate the vacuum means 16 to the second control disc 54. Similarly, the second port 62 is used to selectively communicate air to the second control disc 54.

With reference now to FIGURES 2 and 4-6, the second control disc 54 has a port 69 having first and second ends 70, 71. The first end 70 preferably has a surface hole 72 as seen in FIGURES 4 and 6. The port 69 communicates the inner surface 57 to the outer surface 58 of the second control disc 54. The port 69 of the second control disc 54 is selectively used to communicate either the first port 61 or the second port 62 of the first control disc 53 with the vacuum actuator 32. Alternately, the port 69 of the second control disc 54 may selectively be non-communicative with the first and second ports 61, 62 of the first control disc 53. This is the condition shown in FIGURE 6 where the surface hole 72 of the port 69 of the second control disc 54 is positioned between the first and second slot surfaces 67, 68 of the first control disc 53. Therefore, when the first port 61 of the first control disc 53 is aligned with the port 69 of the second control disc 54 the vacuum means 16 is communicated to the vacuum actuator 32. Similarly, when the second port 62 of the first control disc 53 is aligned with the port 69 of the second control disc 54. the atmosphere (not shown) is communicated to the vacuum actuator 32. When the port 69 of the second control disc 54 is not in alignment with either the first or second ports 61, 62 of the first control disc 53, as illustrated in FIGURE 6, the vacuum actuator 32 is communicated with the inner surface 55 of the first control disc 53. In other words, the vacuum actuator 32 is closed off and thus maintains whatever given pressure within that it has at that moment. In this case, the object 18 is maintained in its given position.

With reference now to FIGURE 3-6, the first edge 43 of the slot surface 67 of the first port 61 is angularly spaced from the first edge 44 of the slot surface 68 of the second port 62 by an angular length L1. The angular length L1 sets the range of motion for the control lever 52. In other words, increasing the angular length L1 increases the rotational range of motion for the control lever 52 and decreasing the angular length L1 decreases the rotational range of motion for the control lever 52. The surface hole 72 is angularly spaced from the second edge 45 of the slot surface 68 by an angular distance D1. The surface hole 72 may be similarly spaced from the second edge 46 of the slot surface 67. The angular distance D1 sets the range of motion for the control lever 52 wherein no control is achieved. In other words, increasing the angular distance D1 increases the angular motion of the control lever 52 required before the surface hole 72 becomes aligned with either of the slot surfaces 67 or 68. Decreasing the angular distance D1 decreases the angular motion of the control lever 52 required before the surface hole 72 becomes aligned with either of the slot surfaces 67 or 68. This provides for a quicker reaction rate for the operator and is preferred.

With reference now to FIGURES 2 and 5, sealing means 74 is used to seal the first and second control discs 53, 54 together. In other words, the inner surface 55 of the first control disc 53 must maintain a sealing relationship with the inner surface 57 of the second control disc 54 that prevents air leakage but allows the first and second control discs 53, 54 to be rotated about the connection shaft 73 with respect to one another. The sealing means 74 can be of any type chosen with sound engineering judgement, but in the preferred embodiment includes a spring 75 that is positioned between the frame 12 of the lawn tractor and the outer surface 58 of the second control disc 54. It is further preferred that the spring 75 receive the connection shaft 73 as shown in FIGURE 5. The position controller 51 may also require rotation maintenance means 76 that maintains the position of the first control disc 53 as the second control disc 54 is rotated about the connection shaft 73. In other words, the rotation maintenance means 76 maintains the angular position of the first control disc 53 with respect to the frame 12 of the lawn tractor 10 and thus with respect to the operator. In the embodiment shown, the rotation maintenance means 76 includes a washer 77 that abuts the first end 78 of the connection shaft 73 and is fixedly connected to the first control disc 53. This is shown in FIGURE 5.

With reference now to FIGURES 1-2 and 5, the position feedback means 80 can be of any type chosen with sound engineering judgement that communicates the position of the object 18 to the activating means 50. The position feedback means 80 may include a feedback bar 81 that is connected to the object 18 and to an extension bracket 82 that is itself connected to the second control disc 54.

With reference now to FIGURES 1-6, the operation of the positioning control system 30 will now be discussed. To adjust the position of the object 18, the operator first positions the control lever 52 to the appropriate place. This would rotate the first control disc 53 with respect to the second control disc 54 and the frame 12 of the lawn tractor 10. Thus, for example, if the operator desired to move the object 18 in first direction 24, the operator would place the control lever 52 in the appropriate position that would align the first port 61 of the first control disc 53 with the port 69 of the second control disc 54. This would communicate the vacuum actuator 32 with the vacuum means 16. Thus, a vacuum would be created within the vacuum actuator 32 causing the first side 34 of the vacuum actuator as well as the connecting means 40 and the object 18 to move in first direction 24. As the object 18 moves in the first direction 24, the feedback bar 81 also moves in the first direction 24 and causes the second control disc 54 to rotate about the connection shaft 73 with respect to the first control disc 53 and the frame 12. Thus, once the object 18 has obtained the proper position, the port 69 of the second control disc 54 would not longer be aligned with the first port 61 of the first control disc 53. Thus, the vacuum means 16 would no longer be in communication with the vacuum actuator 32. This would stop the motion of the first side 34 of the vacuum actuator and the object 18.

With continuing reference to FIGURES 1-6, if the operator desired to move the object 18 in the second direction 25, the operator would place the control lever 52 in the appropriate position that would align the second port 62 of the first control disc 53 with the port 69 of the second control disc 54. This would communicate the vacuum actuator 32 with the atmosphere. Thus, air would be travel into the vacuum actuator 32 causing the first side 34 of the vacuum actuator as well as the connecting means 40 and the object 18 to move in the second direction 25. For a mower deck 20, as shown in FIGURE 1, gravity would also assist this motion. As the object 18 moves in the second direction 25, the feedback bar 81 also moves in the second direction 25 and causes the second control disc 54 to rotate about the connection shaft 73 with respect to the first control disc 53 and the frame 12 in a direction opposite to that mentioned above. Thus, once the object 18 has obtained the proper position, the port 69 of the second control disc 54 would not longer be aligned with the first port 61 of the first control disc 53. Thus, the atmosphere would no longer be in communication with the vacuum actuator 32. This would stop the motion of the first side 34 of the vacuum actuator and the object 18.

The preferred embodiments have been described, hereinabove. It will be apparent to those skilled in the art that the above methods may incorporate changes and modifications without departing from the general scope of this invention. It is intended to include all such modifications and alterations in so far as they come within the scope of the appended claims.

## Claims

1. A mower (10) including a frame (12) a mower deck (20) operatively mounted to the frame and having a first cutting blade, an engine (14) for use in selectively rotating the first cutting blade, said mower deck (20) to be position controlled and, a position control system (30) for use in positioning the mower deck (20), the position control system, being **characterized by**:
a vacuum actuator (32);
connecting means (40) for operatively connecting said vacuum actuator to said mower deck (20);
an intake manifold (17) attached to said engine (14) for use in providing a vacuum to said vacuum actuator;
activating means (50) for selectively activating said vacuum actuator; and,
position feedback means (80) for feeding back the position of said mower deck (20) to said activating means.

2. The mower of claim 1 wherein said position feedback means (80) selectively de-activates said activating means (50) thereby selectively de-activating said vacuum actuator (32).

3. The mower of claim 1 further comprising:
first and second vacuum lines (22), (23), said first vacuum line for use in communicating said intake manifold (17) to said activating means, said second vacuum line for use in communicating said activating means to said vacuum actuator.

4. The mower of claim 1 wherein said activating means comprises:
a connection shaft (73) fixedly connected to said frame (12);
first and second control discs (53), (54) each having connection bores (59), (60) that receive said connection shaft and being selectively rotacable about said connection shaft; and,
a control lever (52) operatively connected to said first control disc.

5. The mower of claim 4 wherein:
said second control disc (54) has a port (69); and,
said first control disc (53) has first and second ports (61), (62), said first port for use in selectively communicating said intake manifold (017) to said port in said second disc, said second port for use in selectively communicating air to said port in said second disc.

6. The mower of claim 5 wherein:
said first and second ports (61), (62) in said first control disc (53) have first ends (63), (65) with first and second slot surfaces (67), (68) on an inner surface (55) of said first control disc;
said port (69) in said second control disc (54) has a first end (70) with a surface hole (72) on an inner surface (57) of said second control disc;
said surface hole (72) being angularly spaced a distance D1 from edges of said first and second slot surfaces (67), (68) when said port (69) in said second control disc is non-communicative with said first and second ports (61), (62) in said first control disc.

7. The mower of claim 4 further comprising:
sealing means (74) for use in sealing said first and second control discs (53), (54) together, said sealing means including a spring (75) positioned between said frame (12) and an outer surface (58) of said second control disc (54).

8. The mower of claim 7 further comprising:
rotation maintenance means (76) for use in maintaining the angular position of said first control disc (53) with respect to said frame (12), said rotation maintenance means including a washer (77) abutting a first end (78) of said connection shaft (73), said washer being fixedly connected to said first control disc (53).

9. The mower of claim 4 wherein said position feedback means (80) comprises:
a feedback bar (81) that is connected to said mower deck (20) and to said second control disc (54).

10. A method of adjusting the position of a mower deck (20) including the steps of providing a vehicle (10) having a frame (12), an engine (14) and a mower deck (20) to be position controlled and providing a positioning control system (30) operatively connected to the frame, the method being **characterized by** the steps of:
providing the positioning control, system with a vacuum actuator (32), connecting means (40) for operatively connecting the vacuum actuator to the mower deck (20) and an intake manifold (17) for providing a vacuum to the vacuum actuator;
positioning a control lever (52) on an activating means (50);
communicating the vacuum actuator (32) with the intake manifold (17);
causing a first side (34) of the vacuum actuator to move in a first direction (24) thereby forcing the mower deck (20) to move in the first directions;
feeding back the position of the mower deck (20) to the activating means (50);
dis-communicating the vacuum actuator (32) with the intake manifold (17); and,
stopping the motion of the first side (34) of the vacuum actuator (32) in the first direction (24) thereby stopping the motion of the mower deck (20) in the first direction (24).

11. The method of claim 10 further comprising the steps of:
providing the activating means (50) with first and second control discs (53), (54); and,
wherein the step of positioning a control lever (52) on an activating means (50) comprises the step of rotating the first control disc (53) with respect to the second control disc (54) and with respect to the frame (12).

12. The method of claim 11 wherein the step of rotating the first disc with respect to the second control disc and with respect to the frame comprises the step of:
aligning a first port (61) within the first control disc with a port (69) in the second control disc.

13. The method of claim 12 further comprising the steps of:
providing a feedback bar (81) operatively connected to the mower deck (20) and to the second control disc;
wherein the step of feeding back the position of the mower deck (20) to the activating means comprises the step of causing the second control disc (54) to rotate with respect to the first control disc (53) and with respect to the frame (12); and,
wherein the step of dis-communicating the vacuum actuator (32) with the intake manifold (17) comprises the step of dis-aligning the first port (61) within the first control disc (53) with the port (69) in the second control disc (54).

14. The method of claim 10 further comprising the steps of:
re-positioning the control lever (52) on the activating means (50);
communicating the vacuum actuator (32) with atmosphere;
causing the first side (34) of the vacuum actuator to move in a second direction (25) thereby forcing the mower deck (20) to move in the second direction (25);
feeding back the position of the mower deck (20) to the activating means (50);
dis-communicating the vacuum actuator (32) with the atmosphere; and,
stopping the motion of the first side (34) of the vacuum actuator is the second direction (25) thereby stopping the motion of the mower deck (20) in the second direction (25).

## Patentansprüche

1. Mäher bzw. Mähmaschine (10), die einen Rahmen (12), eine Mähmaschinenplatte bzw. ein Mähmaschinendeck (20), das an dem Rahmen operativ angeordnet ist und ein erstes Schneidmesser aufweist, einen Motor (14) für eine Verwendung zum selektiven Drehen des ersten Schneidmessers, wobei das Mähmaschinendeck (20) hinsichtlich der Position zu steuern bzw. zu regeln ist, und ein Positionssteuerungs- bzw. Regelungssystem (30) für eine Verwendung zum Positionieren des Mähmaschinendecks (20) aufweist, wobei das Positionssteuerungs- bzw. Regelungssystem **gekennzeichnet ist durch**:
einen Unterdruckbetätiger bzw. -aktuator (32);
Verbindungsmittel (40) zum operativen Verbinden des Unterdruckaktuators mit dem Mähmaschinendeck (20);
eine an dem Motor (14) angebrachte Ansaugleitung (17) für eine Verwendung zum Erzeugen eines Unterdrucks bei dem Unterdruckaktuator;
Aktivierungsmittel (50) zum selektiven Aktivieren des Unterdruckaktuators; und
Positionsfeedback- bzw. Rückkopplungsmittel (80) zum Rückkoppeln der Position des Mähmaschinendecks (20) zu bzw. mit den Aktivierungsmitteln.

2. Mähmaschine nach Anspruch 1, bei der die Positionsrückkopplungsmittel (80) die Aktivierungsmittel (50) selektiv deaktivieren, um hierdurch den Unterdruckaktuator (32) selektiv zu deaktivieren.

3. Mähmaschine nach Anspruch 1, weiterhin aufweisend:
eine erste Unterdruckleitung (22) und eine zweite Unterdruckleitung (23), wobei die erste Unterdruckleitung für eine Verwendung zum Verbinden der Ansaugleitung (17) mit den Aktivierungsmitteln dient und die zweite Unterdruckleitung für eine Verwendung zum Verbinden der Aktivierungsmittel mit dem Unterdruckaktuator dient.

4. Mähmaschine nach Anspruch 1, bei der die Aktivierungsmittel aufweisen:
eine Verbindungswelle (73), die mit dem Rahmen (12) fest verbunden ist;
eine erste Steuer- bzw. Regelscheibe (53) und eine zweite Steuer- bzw. Regelscheibe (54), wobei jede Scheibe Verbindungsbohrungen (59, 60) aufweist, welche die Verbindungswelle aufnehmen, und um die Verbindungswelle selektiv drehbar ist; und
einen Steuer- bzw. Regelhebel (52), der mit der ersten Steuerscheibe operativ verbunden ist.

5. Mähmaschine nach Anspruch 4, bei der:
die zweite Steuerscheibe (54) eine Öffnung (69) aufweist; und
die erste Steuerscheibe (53) eine erste Öffnung (61) und eine zweite Öffnung (62) aufweist, wobei die erste Öffnung für eine Verwendung zum selektiven Verbinden der Ansaugleitung (17) mit der Öffnung in der zweiten Scheibe dient und die zweite Öffnung für eine Verwendung zum selektiven Zuführen von Luft zu der Öffnung in der zweiten Scheibe dient.

6. Mähmaschine nach Anspruch 5, bei der:
die erste Öffnung (61) und die zweite Öffnung (62) in der ersten Steuerscheibe (53) erste Enden (63, 65) mit einer ersten Schlitzfläche (67) und einer zweiten Schlitzfläche (68) an einer Innenseite (55) der ersten Steuerscheibe aufweisen;
die Öffnung (69) in der zweiten Steuerscheibe (54) ein erstes Ende (70) mit einer Oberflächenöffnung bzw. -loch (72) an einer Innenseite (57) der zweiten Steuerscheibe aufweist;
wobei die Oberflächenöffnung (72) um einen Abstand bzw. eine Strecke D1 von jeweiligen Rändern der ersten Schlitzoberfläche (67) und der zweiten Schlitzoberfläche (68) winklig bzw. winkelmäßig beabstandet ist, wenn die Öffnung (69) in der zweiten Steuerscheibe mit der ersten Öffnung (61) und der zweiten Öffnung (62) in der ersten Steuerscheibe nicht in Verbindung steht.

7. Mähmaschine nach Anspruch 4, weiterhin aufweisend:
Abdichtmittel (74) für eine Verwendung zum Abdichten der ersten Steuerscheibe (53) und der zweiten Steuerscheibe (54) miteinander, wobei die Abdichteinrichtung eine Feder (75) aufweist, die zwischen dem Rahmen (12) und einer Außenseite (58) der zweiten Steuerscheibe (54) positioniert ist.

8. Mähmaschine nach Anspruch 7, weiterhin aufweisend:
Rotationserhaltungsmittel (76) für eine Verwendung zum Aufrechterhalten der Winkelposition der ersten Steuerscheibe (53) in Bezug auf den Rahmen (12), wobei die Rotationsaufrechterhaltungsmittel eine Scheibe (77) aufweisen, die an ein erstes Ende (78) der Verbindungswelle (73) anschlägt bzw. anstößt, und wobei die Scheibe mit der ersten Steuerscheibe (53) fest verbunden ist.

9. Mähmaschine nach Anspruch 4, bei der die Positionsrückkopplungsmittel (80) aufweisen:
eine Rückkopplungsstange (81), die mit dem Mähmaschinendeck (20) und der zweiten Steuerscheibe (54) verbunden ist.

10. Verfahren zum Einstellen der Position einer Mähmaschinenplatte bzw. eines Mähmaschinendecks (20), mit den Schritten des Bereitstellens eines Fahrzeugs (10) mit einem Rahmen (12), einem Motor (14) und einem Mähmaschinendeck (20), das hinsichtlich der Position zu steuern bzw. zu regeln ist, und des Bereitstellens eines Positionssteuerungs- bzw. - regelungssystems (30), das mit dem Rahmen operativ verbunden ist, wobei das Verfahren durch die folgenden Schritte gekennzeichnet ist:
Ausrüsten des Positionssteuerungssystems mit einem Unterdruckbetätiger bzw. -aktuator (32), Verbindungsmittel (40) zum operativen Verbinden des Unterdruckaktuators mit dem Mähmaschinendeck (20) und eine Ansaugleitung (17) zum Erzeugen eines Unterdrucks bei dem Unterdruckaktuator;
Positionieren eines Steuer- bzw. Regelhebels (52) an Aktivierungsmitteln (50);
Verbinden des Unterdruckaktuators (32) mit der Ansaugleitung (17);
Veranlassen, dass sich eine erste Seite (34) des Unterdruckaktuators in eine erste Richtung (24) bewegt, um hierdurch das Mähmaschinendeck (20) dazu zu drängen, sich in die erste Richtung zu bewegen;
Rückkoppeln der Position des Mähmaschinendecks (20) zu den Aktivierungsmitteln (50);
Trennen der Verbindung des Unterdruckaktuators (32) mit der Ansaugleitung (17); und
Anhalten der Bewegung der ersten Seite (34) des Unterdruckaktuators (32) in der ersten Richtung (24), um hierdurch die Bewegung des Mähmaschinendecks (20) in der ersten Richtung (24) anzuhalten.

11. Verfahren nach Anspruch 10, femer die folgenden Schritte aufweisend:
Ausrüsten der Aktivierungsmittel (50) mit einer ersten Steuerscheibe (53) und einer zweiten Steuerscheibe (54);
wobei der Schritt des Positionierens eines Steuer- bzw. Regelhebels (52) an einem Aktivierungsmittel (50) den Schritt des Drehens der ersten Steuerscheibe (53) in Bezug auf die zweite Steuerscheibe (54) und in Bezug auf den Rahmen (12) aufweist.

12. Verfahren nach Anspruch 11, bei dem der Schritt des Drehens der ersten Scheibe in Bezug auf die zweite Steuerscheibe und in Bezug auf den Rahmen den folgenden Schritt aufweist:
Ausrichten einer ersten Öffnung (61) innerhalb der ersten Steuerscheibe mit einer Öffnung (69) in der zweiten Steuerscheibe.

13. Verfahren nach Anspruch 12, ferner die folgenden Schritte aufweisend:
Vorsehen einer Rückkopplungsstange (81), die mit dem Mähmaschinendeck (20) und der zweiten Steuerscheibe operativ verbunden ist;
wobei der Schritt des Rückkoppelns der Position des Mähmaschinendecks (20) zu bzw. mit den Aktivierungsmitteln den Schritt aufweist, die zweite Steuerscheibe (54) dazu zu veranlassen, sich in Bezug auf die erste Steuerscheibe (53) und in Bezug auf den Rahmen (12) zu drehen; und
wobei der Schritt des Trennens der Verbindung des Unterdruckaktuators (32) mit der Ansaugleitung (17) den Schritt des Aufhebens der Ausrichtung der ersten Öffnung (61) innerhalb der ersten Steuerscheibe (53) mit der Öffnung (69) in der zweiten Steuerscheibe (54) aufweist.

14. Verfahren nach Anspruch 10, weiterhin die folgenden Schritte aufweisend:
Erneutes Positionieren des Steuerhebels (52) an den Aktivierungsmitteln (50);
Verbinden des Unterdruckaktuators (32) mit Atmosphäre;
Veranlassen, dass sich die erste Seite (34) des Unterdruckaktuators in einer zweiten Richtung (25) bewegt, um hierdurch das Mähmaschinendeck (20) dazu zu drängen, sich in der zweiten Richtung (25) zu bewegen;
Rückkoppeln der Position des Mähmaschinendecks (20) zu bzw. mit den Aktivierungsmitteln (50);
Trennen der Verbindung des Unterdruckaktuators (32) mit der Atmosphäre; und
Anhalten der Bewegung der ersten Seite (34) des Unterdruckaktuators in der zweiten Richtung (25), um hierdurch die Bewegung des Mähmaschinendecks (20) in der zweiten Richtung (25) anzuhalten.

## Revendications

1. Tondeuse (10) comprenant un châssis (12) et un capot de tondeuse (20) monté fonctionnellement sur le châssis et comportant une première lame de coupe, un moteur (14) à utiliser pour faire tourner sélectivement la première lame de coupe, le capot de tondeuse (20) à commander en position et un système de commande de position (30) à utiliser pour positionner le capot de tondeuse (20), le système de commande de position étant ***caractérisé par :***
- un actionneur à dépression (32),
- des moyens de raccordement (40) pour raccorder fonctionnellement l'actionneur à dépression au capot de tondeuse (20),
- un collecteur d'admission (17) fixé au moteur (14), à utiliser pour procurer une dépression à l'actionneur à dépression,
- des moyens d'activation (50) pour activer sélectivement l'actionneur à dépression, et
- des moyens de rétroaction de position (80) pour appliquer en retour aux moyens d'activation la position du capot de tondeuse (20).

2. Tondeuse suivant la revendication 1, dans laquelle les moyens de rétroaction de position (80) désactivent sélectivement les moyens d'activation (50), en désactivant sélectivement par cela l'actionneur à dépression (32).

3. Tondeuse suivant la revendication 1, comprenant en outre :
- des premières et secondes conduites de dépression (22), (23), la première conduite de dépression à utiliser pour mettre en communication le collecteur d'admission (17) et les moyens d'activation, la seconde conduite de dépression à utiliser pour mettre en communication les moyens d'activation et l'actionneur à dépression.

4. Tondeuse suivant la revendication 1, dans laquelle les moyens d'activation comprennent :
- un arbre de raccordement (73) raccordé fixement au châssis (12),
- des premier et second disques de commande (53), (54) comportant chacun des trous de raccordement (59), (60) qui reçoivent l'arbre de raccordement, et pouvant tourner sélectivement autour de l'arbre de raccordement, et
- un levier de commande (52) raccordé fonctionnellement au premier disque de commande.

5. Tondeuse suivant la revendication 4, dans laquelle :
- le second disque de commande (54) comporte un orifice (69), et
- le premier disque de commande (53) comporte des premier et second orifices (61), (62), le premier orifice à utiliser pour mettre sélectivement en communication le collecteur d'admission (17) et l'orifice du second disque, le second orifice à utiliser pour mettre sélectivement en communication l'atmosphère et l'orifice du second disque.

6. Tondeuse suivant la revendication 5, dans laquelle :
- les premier et second orifices (61), (62) du premier disque de commande (53) comportent des premières extrémités (63), (65) avec des première et seconde surfaces d'encoche (67), (68) sur une surface interne (55) du premier disque de commande,
- l'orifice (69) du second disque de commande (54) comporte une première extrémité (70) avec une cavité de surface (72) sur une surface interne (57) du second disque de commande,
- la cavité de surface (72) étant écartée de manière angulaire d'une distance D1 par rapport à des bords des première et seconde surfaces d'encoche (67), (68) lorsque l'orifice (69) du second disque de commande n'est pas en communication avec les premier et second orifices (61), (62) du second disque de commande.

7. Tondeuse suivant la revendication 4, comprenant dé plus :
- des moyens d'étanchéité (74) à utiliser pour rendre étanche ensemble les premier et second disques de commande (53), (54), les moyens d'étanchéité comprenant un ressort (75) positionné entre le châssis (12) et une surface externe (58) du second disque de commande (54).

8. Tondeuse suivant la revendication 7, comprenant de plus :
- des moyens de conservation d'une rotation (76) à utiliser pour conserver la position angulaire du premier disque de commande (53) par rapport au châssis (12), les moyens de conservation d'une rotation comprenant une rondelle (77) montée en bout d'une première extrémité (78) de l'arbre de raccordement (73), la rondelle étant raccordée fixement au premier disque de commande (53).

9. Tondeuse suivant la revendication 4, dans laquelle les moyens de rétroaction de position (80) comprennent :
- une barre de rétroaction (81) qui est raccordée au capot de tondeuse (20) et au second disque de commande (54).

10. Procédé de réglage de la position d'un capot de tondeuse (20) comprenant les étapes de prévoir un véhicule (10) comportant un châssis (12), un moteur (14) et un capot de tondeuse (20) à commander en position, et de prévoir un système de commande de positionnement (30) raccordé fonctionnellement au châssis, le procédé étant ***caractérisé par*** les étapes de :
- équiper le système de commande de positionnement avec un actionneur à dépression (32), des moyens de raccordement (40) pour raccorder fonctionnellement l'actionneur à dépression au capot de tondeuse (20), et un collecteur d'admission (17) pour procurer une dépression pour l'actionneur à dépression,
- positionner un levier de commande (52) sur des moyens d'activation (50),
- mettre en communication l'actionneur à dépression (32) et le collecteur d'admission (17),
- amener un premier côté (34) de l'actionneur à dépression à se déplacer dans un premier sens (24) en forçant par cela le capot de tondeuse (20) à se déplacer dans le premier sens,
- appliquer en retour la position du capot de tondeuse (20) aux moyens d'activation (50),
- arrêter la communication entre l'actionneur à dépression (32) et le collecteur d'admission (17), et
- arrêter le mouvement du premier côté (34) de l'actionneur à dépression (32) dans le premier sens (24), en arrêtant par cela le mouvement du capot de tondeuse (20) dans le premier sens (24).

11. Procédé suivant la revendication 10, comprenant de plus les étapes de:
- équiper les moyens d'activation (50) de premier et second disques de commande (53), (54), et
- l'étape de positionnement d'un levier de commande (52) sur des moyens d'activation (50) comprenant l'étape de faire tourner le premier disque de commande (53) par rapport au second disque de commande (54) et par rapport au châssis (12).

12. Procédé suivant la revendication 11, dans lequel l'étape de faire tourner le premier disque par rapport au second disque de commande et par rapport au châssis comprend l'étape de :
- aligner un premier orifice (61) du premier disque de commande avec un orifice (69) du second disque de commande.

13. Procédé suivant la revendication 12, comprenant en outre les étapes de :
- prévoir une barre de rétroaction (81) raccordée fonctionnellement au capot de tondeuse (20) et au second disque de commande,
- l'étape d'appliquer en retour la position du capot de tondeuse (20) aux moyens d'activation comprenant l'étape d'amener le second disque de commande (54) à tourner par rapport au premier disque de commande (53) et par rapport au châssis (12), et
- l'étape d'arrêter la communication entre l'actionneur à dépression (32) et le collecteur d'admission (17) comprenant l'étape de désaligner le premier orifice (61) du premier disque de commande (53) d'avec l'orifice (69) du second disque de commande (54).

14. Procédé suivant la revendication 10, comprenant de plus les étapes de :
- positionner à nouveau le levier de commande (52) sur les moyens d'activation (50),
- mettre en communication l'actionneur à dépression (32) et l'atmosphère,
- amener le premier côté (34) de l'actionneur à dépression à se déplacer dans un second sens (25) en forçant par cela le capot de tondeuse (20) à se déplacer dans le second sens (25),
- appliquer en retour la position du capot de tondeuse (20) aux moyens d'activation (50),
- arrêter la communication entre l'actionneur à dépression (32) et l'atmosphère, et
- arrêter le mouvement du premier côté (34) de l'actionneur à dépression dans le second sens (25), en arrêtant par cela le mouvement du capot de tondeuse (20) dans le second sens (25).
